## Europäisches Patentamt

## European Patent Office

## Office européen des brevets

(19)

(11) Veröffentlichungsnummer: **0 098 287**
**B1**

(12) # EUROPÄISCHE PATENTSCHRIFT

(45) Veröffentlichungstag der Patentschrift:
**02.07.86**

(51) Int. Cl.⁴: **G 01 N 13/02**

(21) Anmeldenummer: **83900343.1**

(22) Anmeldetag: **18.01.83**

(86) Internationale Anmeldenummer:
**PCT/EP 83/00013**

(87) Internationale Veröffentlichungsnummer:
**WO 83/02500 (21.07.83 Gazette 83/17)**

(54) **VERFAHREN ZUR MESSUNG UND/ODER KONTROLLE DER OBERFLÄCHENSPANNUNG VON FLÜSSIGKEITEN.**

(30) Priorität: **19.01.82 DE 3201410**

(43) Veröffentlichungstag der Anmeldung:
**18.01.84 Patentblatt 84/3**

(45) Bekanntmachung des Hinweises auf die Patenterteilung:
**02.07.86 Patentblatt 86/27**

(84) Benannte Vertragsstaaten:
**AT BE CH DE FR GB LI LU NL SE**

(56) Entgegenhaltungen:
**DE-A-2 836 972**
**DE-B-1 071 379**

**Review of Scientific Instruments, vol. 49, no. 10, October 1978, (New York, US), C.H.SOHL u.a.: "Novel technique for dynamic surface tension and viscosity measurements at liquid-gas interfaces", pages 1464-1463**

(73) Patentinhaber: **ALEXANDER, Martin Dr., Wilhelm-Kuhnert- Str. 24, D-8000 München 90 (DE)**

(72) Erfinder: **ALEXANDER, Martin Dr., Wilhelm-Kuhnert- Str. 24, D-8000 München 90 (DE)**

(74) Vertreter: **Tetzner, Volkmar, Dr.- Ing. Dr. Jur., Van- Gogh- Strasse 3, D-8000 München 71 (DE)**

EP 0 098 287 B1

## Beschreibung

Die Erfindung betrifft ein Verfahren entsprechend dem Oberbegriff des Anspruches 1.

Viele organische Substanzen erniedrigen bei Lösung in Wasser dessen Oberflächenspannung. Dies gilt beispielsweise für Alkohole, organische Säuren und deren Salze. Schon geringe Mengen derartiger Substanzen machen sich in ihrem Einfluß auf die Oberflächenspannung deutlich bemerkbar. Durch Messung der Oberflächenspannung kann daher das Vorhandensein und der Anteil bestimmter Substanzen in der Flüssigkeit ermittelt werden.

Zur Messung der Oberflächenspannung von Flüssigkeiten ist es bekannt, auf der Oberfläche der Flüssigkeit mittels eines Schwingungserzeugers bekannter Frequenz stehende Kapillarwellen zu erzeugen und optisch auszuwerten. Bei bekannter Frequenz und Wellenlänge läßt sich nach der aus der Theorie der Kapillarwellen entwickelten Formel

$$\sigma = \frac{1}{2\pi} \cdot \rho \cdot \nu^2 \cdot \lambda^3 - \frac{g \cdot \lambda^2 \cdot \rho}{4\pi^2}$$

$\sigma$ = Oberflächenspannung

$\nu$ = Schwingungszahl

$\lambda$ = Wellenlänge

$\rho$ = Dichte

$g$ = Erdbeschleunigung

die Oberflächenspannung errechnen.

Bei einem bekannten Verfahren der im Oberbegriff des Anspruches 1 vorausgesetzten Art (DE-A- 2 836 972) wird die angeregte Flüssigkeits-Oberfläche durch einen quadratischen Rand begrenzt. Bei Anregung einer derart begrenzten Flüssigkeits-Oberfläche bilden sich abhängig von der jeweiligen Anregungsfrequenz an gewissen Stellen der Oberfläche stehende Wellen aus. Bei einer bestimmten Anregungsfrequenz ergeben sich stehende Wellen beispielsweise auf dem Lot von der zentralen Anregungsstelle zu einer Wandfläche der quadratischen Begrenzung. Auf dieser Meßlinie muß dann die Stelle gesucht werden, an der das Maximum der Amplitude auftritt. Dieser Meßpunkt liegt nun für jede Frequenz an einer anderen Stelle der Meßlinie. Da jedoch die Anregungsfrequenz variiert werden muß, um überhaupt auf der Meßlinie stehende Wellen zu erzeugen, muß gleichzeitig mit der Änderung der Frequenz die Meßlinie daraufhin abgesucht werden, an welcher Stelle das Amplitudenmaximum auftritt.

Durch "Review of Scientific Instruments", vol.49, No.10, S.1464-1469, ist ferner die berührungslose Erzeugung von Kapillarwellen bekannt, deren Amplitude durch Messung der Laserstrahlablenkung auf einer lageempfindlichen Photodiode bestimmt wird. Bekannt ist schließlich die Messung der Oberflächenspannung an einem Flüssigkeitsmeniskus durch Abtasten der auf einer photodiode auftreffenden Strahlungsintensität von Licht, das an diesem Meniskus reflektiert wird (DE-B- 1 071 379).

Der Erfindung liegt die Aufgabe zugrunde, ein Verfahren der im Oberbegriff des Anspruches 1 vorausgesetzten Art so auszubilden, daß es sich durch eine besonders einfache Handhabung auszeichnet und auch für eine selbsttätige Kontrolle der Oberflächenspannung von Flüssigkeiten geeignet ist.

Diese Aufgabe wird erfindungsgemäß durch die im Kennzeichen des Anspruches 1 genanten Verfahrensschritte gelöst.

Durch die zentrale oder periphere Anregung des für die Messung verwendeten kreisförmigen Bereiches der Flüssigkeits-Oberfläche ergibt sich bei einer bestimmten Wellenlänge der erzeugten Kapillarwellen ein System kreisringförmiger stehender Kapillarwellen. Sie entstehen dann, wenn der Radius des für die Messung verwendeten kreisförmigen Bereiches ein ganzzahliges Vielfaches der halben Wellenlänge ist.

Das Auftreten des Systems kreisringförmiger stehender Kapillarwellen läßt sich auf einfache Weise dadurch ermitteln, daß die Intensität einer an der Flüssigkeits-Oberfläche reflektierten Lichtstrahlung überwacht wird. Bei der Frequenz, bei der ein System kreisringförmiger stehender Kapillarwellen auftritt, ergibt sich in der Intensität der reflektierten Lichtstrahlung ein scharfes Minimum.

Dies gestattet es, die Oberflächenspannung der Flüssigkeit entweder auf etwaige Abweichungen von einem vorgegebenen Ausgangs- bzw. Sollwert zu überwachen oder - nach vorhergehender Eichung der Meßvorrichtung - die Oberflächenspannung quantitativ zu messen. Ein wesentlicher Vorteil des erfindungsgemäßen Verfahrens besteht darin, daß die Messung und/oder Kontrolle der Oberflächenspannung der Flüssigkeit keine komplizierte optische Auswertung des Oberflächenbildes mittels eines Mikroskopes erfordert. Das erfindungsgemäße Meßverfahren eignet sich daher auch für eine Fernmessung bzw. Fernüberwachung - ein für viele Anwendungsfälle unschätzbarer Vorzug.

Ein Anwendungsgebiet des erfindungsgemäßen Verfahrens besteht in der Überwachung der Reinheit von Gewässern im Rahmen des Umweltschutzes.

Ein anderes technisches Anwendungsgebiet liegt in der Kontrolle des Alkoholanteiles im Feuchtmittel beim Offset-Druck.

Die Wellenlänge der erzeugten Wellen kann erfindungsgemäß zur Erzielung stehender Kapillarwellen durch Änderung der Frequenz des Schwingungserzeugers - unter Konstanthaltung des Durchmessers des angeregten kreisförmigen Oberflächenbereiches - geändert werden.

Eine andere Möglichkeit zur Erzielung stehender Kapillarwellen besteht darin, den Radius des angeregten kreisförmigen Oberflächenbereiches - unter Konstanthaltung der Frequenz des Schwingungserzeugers- zu ändern. Dies kann beispielsweise durch Änderung der Füllhöhe eines konischen Meßgefäßes erfolgen.

Die Erfindung sei anhand der Zeichnung näher erläutert.

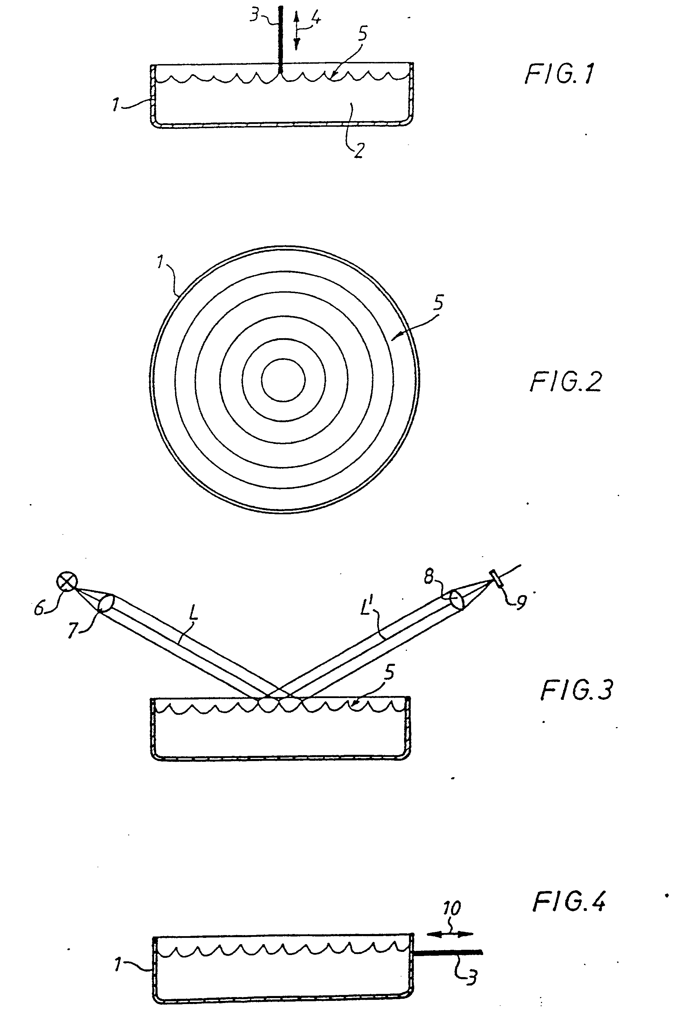

Fig.1 zeigt ein Meßgefäß 1 von kreisförmigem Querschnitt, das eine Flüssigkeitsprobe 2 enthält, in die ein Schwingungserzeuger 3 zentral eintaucht. Dieser Schwingungserzeuger 3 wird durch eine nicht veranschaulichte Einrichtung variabler Frequenz in vertikale Schwingungen (Pfeil 4) versetzt. Bei einer bestimmten Frequenz des Schwingungserzeugers 3 werden auf der Oberfläche 5 der Flüssigkeitsprobe 2 kreisringförmige stehende Kapillarwellen erzeugt (vgl. Fig.2).

Eine Lichtquelle 6 wirft über eine Optik 7 einen Lichtstrahl L auf die Oberfläche 5 der Flüssigkeitsprobe 2 (die Lichtstrahlung erfaßt dabei den Bereich mehrerer Wellenzüge). Der an der Oberfläche reflektierte Lichtstrahl L' gelangt über eine Optik 8 zu einem Sensor 9, der die Intensität der reflektierten Lichtstrahlung mißt (vgl. Fig.3).

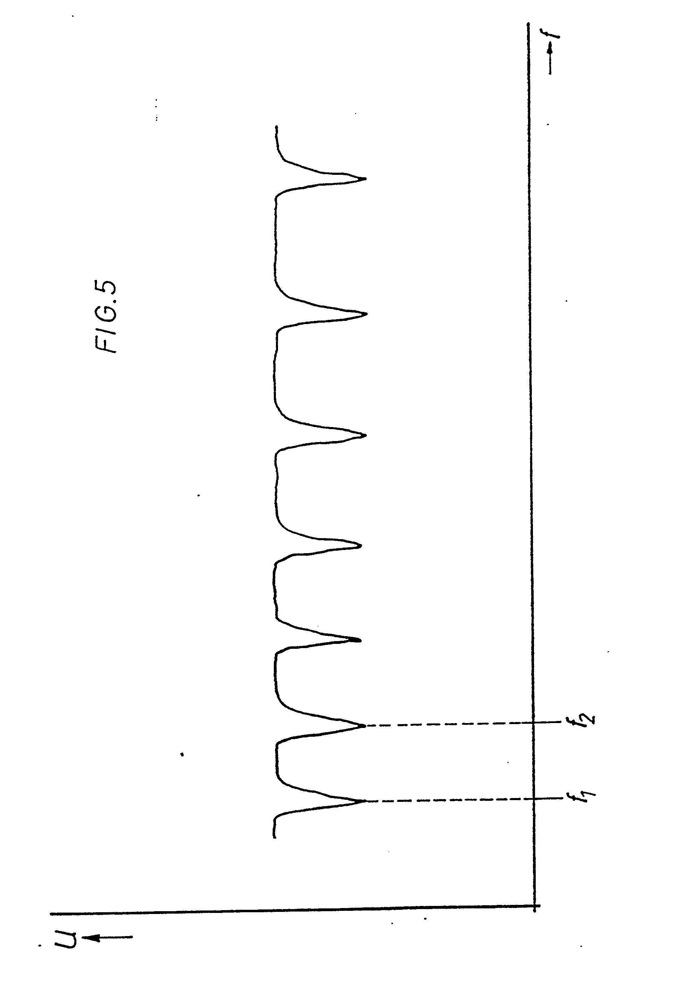

Variiert man nun die Frequenz f des Schwingungserzeugers 3 und ermittelt die Intensität U der vom Sensor 9 empfangenen reflektierten Lichtstrahlung, so stellt man bei bestimmten Freguenzen $f_1$, $f_2$ usw. (vgl. Fig.5) ein als scharfe Spitze ausgeprägtes Minimum der Intensität fest. Bei diesen Frequenzen ist auf der Oberfläche 5 der Flüssigkeitsprobe 2 ein System kreisringförmiger stehender Kapillarwellen vorhanden (hier beträgt der Radius des Meßgefäßes 1 jeweils ein ganzzahliges Vielfaches der halben Wellenlänge, d.h. der Abstände zwischen den Knotenlinien der stehenden Wellen).

Fig.4 zeigt schematisch den Fall, in dem die Oberflächenschwingung nicht zentral, sondern peripher (am Umfang des kreisförmigen Meßgefäßes 1) durch den in Horizontalschwingungen (Pfeil 10) versetzten Schwingungserzeuger 3 angeregt wird.

Für eine Kontrolle der Oberflächenspannung wird es vielfach genügen, lediglich eine etwaige Abweichung der Frequenz (von einem vorgegebenen Ausgangswert bzw. Sollwert) zu ermitteln, bei der das System kreisringförmiger stehender Kapillarwellen auftritt.

Für eine quantitative Messung der Oberflächenspannung ist darüber hinaus eine Eichung der Meßvorrichtung erforderlich. Um den Zusammenhang zwischen der Frequenz f, bei der stehende Kapillarwellen auftreten, und der jeweiligen Oberflächenspannung σ zu ermitteln, wird für mehrere Flüssigkeitsproben unterschiedlicher Oberflächenspannung jeweils die Frequenz und die Wellenlänge beim Auftreten stehender Kapillarwellen bestimmt und hieraus die Oberflächenspannung gemäß der oben genannten Formel errechnet.

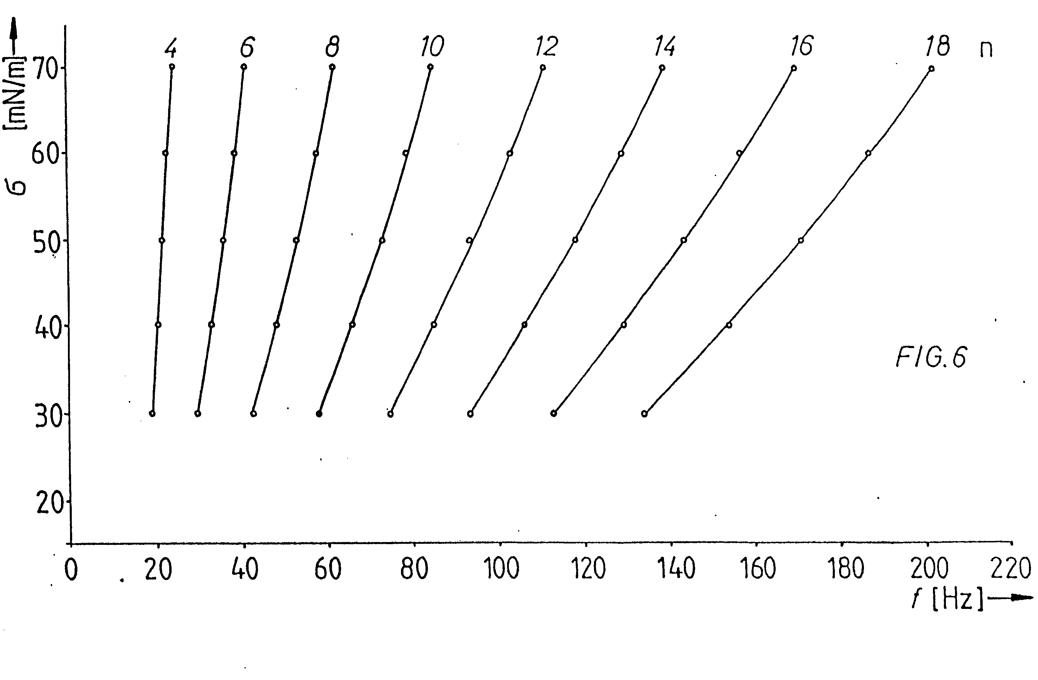

Man gelangt auf diese Weise zu den in Fig.6 wiedergegebenen Eichkurven. Sie gelten für ein Meßgefäß mit kreisförmigem Querschnitt und einem Radius von 2 cm für Flüssigkeiten der Dichte ρ = 1. In der Ordinate ist die Oberflächenspannung σ (in mN/m) und in der Abszisse die Frequenz f (in Hz) aufgetragen. n gibt die Anzahl der kreisringförmigen stehenden Kapillarwellen im Meßgefäß an.

Das Ermitteln der Wellenlänge beim Auftreten stehender Kapillarwellen (zum Zwecke der Eichung) kann entweder durch Auszählen auftretender Knotenlinien bzw. Wellenberge (innerhalb des bekannten Gefäß-Durchmessers) oder durch mikroskopische Auswertung einiger Wellenzüge erfolgen.

Zur weiteren Erläuterung der Erfindung dienen folgende praktische Beispiele:

1. Im Falle der Fig.5 findet ein Meßgefäß mit kreisförmigem Querschnitt und einem Radius von 2 cm Verwendung. Die untersuchte Flüssigkeit besitzt eine Dichte ρ = 1 und eine Oberflächenspannung von 70 mN/m. Die dabei zu beobachtenden Minima liegen bei folgenden Frequenzen: 24,5 - 32,5-41,5 - 51 - 62 - 73 - 85 - 98 - 111 - 125 - 139-154 - 170 Hz.

2. Bei einer Flüssigkeit der Dichte ρ = 1 und einer Oberflächenspannung von 70 mN/m ist λ = 0,5 cm. λ/2 beträgt somit 0,25 cm. In einem konischen Gefäß ergeben sich bei einem Oberflächen-Radius r = 2 cm bei dieser Frequenz acht kreisringförmige stehende Wellen mit einem Knotenlinienabstand von λ/2. Bei jeder Vergrößerung oder Verkleinerung des Oberflächenradius (durch Änderung der Füllhöhe des konischen Meßgefäßes) um λ/2 oder um das Vielfache dieser Strecke lassen sich von neuem stehende Kapillarwellen beobachten. Dadurch ist λ bekannt. Die konstante Frequenz f des Schwingungserzeugers ist vorgegeben. Somit läßt sich die Oberflächenspannung errechnen.

## Patentansprüche

1. Verfahren zur Messung und/oder Kontrolle der Oberflächenspannung von Flüssigkeiten, wobei auf der Oberfläche der Flüssigkeits mittels eines Schwingungserzeugers bekannter Frequenz stehende Kapillarwellen erzeugt und optisch ausgewertet werden, gekennzeichnet durch folgende Verfahrensschritte:

a) ein kreisförmiger Bereich der Flüssigkeits-Oberfläche wird vom Schwingungserzeuger zentral oder peripher angeregt;

b) hierbei wird die Wellenlänge der erzeugten Kapillarwellen oder der Radius des angeregten kreisförmigen Oberflächenbereiches geändert, bis ein System kreisringförmiger stehender Kapillarwellen auftritt;

c) dabei wird das Auftreten des Systems kreisringförmiger stehender Kapillarwellen durch Messung der Intensität einer an der Flüssigkeits-Oberfläche reflektierten Lichtstrahlung bestimmt.

2. Verfahren nach Anspruch 1, dadurch gekennzeichnet, daß die Wellenlänge der erzeugten Kapillarwellen durch Änderung der Frequenz des Schwingungserzeugers - unter Konstanthaltung des Durchmessers des

0 098 287

angeregten kreisförmigen Oberflächenbereiches - geändert wird.

3. Verfahren nach Anspruch 1, dadurch gekennzeichnet, daß der Radius des angeregten kreisförmigen Oberflächenbereiches - unter Konstanthaltung der Frequenz des Schwingungserzeugers - geändert wird.

4. Verfahren nach Anspruch 3, dadurch gekennzeichnet, daß die Änderung des Radius des angeregten kreisförmigen Oberflächenbereiches durch Änderung der Füllhöhe eines konischen Gefäßes erfolgt.

5. Verfahren nach Anspruch 1, dadurch gekennzeichnet, daß die Lichtstrahlung gleichzeitig den Bereich mehrerer Wellenzüge erfaßt.

6. Verfahren nach den Ansprüchen 1 und 2, dadurch gekennzeichnet, daß in einer nach diesem Verfahren arbeitenden Meß- und/oder Kontrollvorrichtung zu deren Eichung der Zusammenhang zwischen der Frequenz, bei der stehende Kapillarwellen auftreten, und der jeweiligen Oberflächenspannung in der Weise ermittelt wird, daß für mehrere Flüssigkeitsproben bekannter unterschiedlicher Oberflächenspannung jeweils die Frequenz und die Wellenlänge beim Auftreten stehender Kapillarwellen bestimmt und hieraus die theoretische Oberflächenspannung errechnt wird.

7. Verfahren zur Überwachung der Reinheit von Gewässern, dadurch gekennzeichnet, daß man hierzu das Verfahren gemäß Patentanspruch 1 anwendet. 8. Verfahren zur Kontrolle des Alkoholanteils im Feuchtmittel beim Offset-Druck, dadurch gekennzeichnet, daß man hierzu das Verfahren gemäß Patentanspruch 1 anwendet.

## Claims

1. Method of measuring and/or controlling the interfacial surface tension of liquids, in which standing capillary waves are produced on the surface of the liquid by means of an oscillation generator of a known frequency and are optically evaluated, characterised by the following features:

a) a circular region of the surface of the liquid is excited centrally or peripherally by the oscillation generator;

b) the wavelength of the capillary waves thus produced or the radius of the excited circular surface region is altered until a system of circular standing capillary waves is produced;

c) the occurence of circular standing capillary waves is determined by measuring the intensity of light radiation reflected on the surface of the liquid.

2. Method as claimed in claim 1, characterised in that the wavelength of the generated capillary waves is altered by altering the frequency of the oscillation generator while keeping the diameter of the excited circular surface region constant.

3. Method as claimed in claim 1, characterised in that the radius of the excited circular surface region is altered while keeping the frequency of the oscillation generator constant

4. Method as claimed in claim 3, characterised in that the alteration of the radius of the excited circular surface region is achieved by alteration of the filling level of a conical vessel.

5. Method as claimed in claim 1, characterised in that the light radiation covers the range of several wave trains simultaneously.

6. Method as claimed in claims 1 and 2, characterised in that for calibration of a measuring and/or controlling device operating according to this method the relationship between the frequency at which the standing capillary waves occur and the respective surface tension is determined in such a way that for several fluid samples of differing surface tension the frequency and the wavelength at which standing capillary waves occur is determined in each case and from this the surface tension is calculated.

7. Method for controlling the purity of water, characterised by using the method according claim 1.

8. Method for controlling the alcohol content in the moistening means in offset printing, characterised by using the method according claim 1.

## Revendications

1. Procédé de mesure et/ou de contrôle de la tension superficielle de liquides par production et analyse optique d'un moutonnement formé d'ondes capillaires stationnaires à la surface du liquide au moyen d'un générateur d'oscillations de fréquence connue, caractérisé par la succession suivante d'opérations:

a) une zone circulaire de la surface du liquide est animée centralement ou à la périphérie par le générateur d'oscillations;

b) la longueur des ondes capillaires générées ou le rayon de la zone circulaire animée de la surface subit alors une variation jusqu'à ce qu'apparaisse un système d'ondes capillaires circulaires et stationnaires;

c) cette apparition du système d'ondes capillaires circulaires et stationnaires se détermine par mesure de l'intensité d'un rayon lumineux réfléchi à la surface du liquide.

2. Procédé selon la revendication 1, caractérisé en ce que la longueur des ondes capillaires générées se modifie par variation de la fréquence du générateur d'oscillations - en maintenant le diamètre de la zone circulaire animée de la surface à une valeur constante.

3. Procédé selon la revendication 1, caractérisé en ce que le rayon de la zone circulaire animée de la surface

4

subit une variation - en maintenant la fréquence du générateur d'oscillations à une valeur constante.

4. Procédé selon la revendication 3, caractérisé en ce que la variation du rayon de la zone circulaire animée de la surface s'effectue par modification du niveau de remplissage d'un récipient conique.

5. Procédé selon la revendication 1, caractérisé en ce que le rayonnement lumineux couvre simultanément la région de plusieurs trains d'ondes.

6. Procédé selon les revendications 1 et 2, caractérisé en ce que l'étalonnage d'un dispositif de mesure et/ou de contrôle fonctionnant d'après ce procédé s'effectue par détermination de la relation existant entre la fréquence à laquelle apparaissent les ondes capillaires stationnaires et la tension superficielle particulière en détectant pour plusieurs échantillons de liquides, dont les différentes tensions superficielles sont connues, la fréquence et la longueur d'onde lors de l'apparition des ondes capillaires stationnaires, puis en calculant d'après elles la tension superficielle théorique.

7. Procédé de contrôle de la pureté d'eaux usées, caractérisé en ce qu'il consiste en mettre en oeuvre le procédé selon la revendication 1.

8. Procédé de contrôle de la proportion d'alcool que contient l'agent mouillant en impression offset, caractérisé en ce qu'il consiste à mettre en oeuvre le procédé selon la revendication 1.

FIG.1

FIG.2

FIG.3

FIG.4

FIG.5

FIG.6